# EUROPEAN PATENT APPLICATION

(11) **EP 3 147 272 A1**
(43) Date of publication of application: **29.03.2017**
(21) Application number: 16187301.3
(22) Date of filing: 05.09.2016
(51) Int. Cl.: C05F 9/04, C05F 17/00, C02F 11/02

(54) **METHOD OF PRODUCING ORGANIC-MINERAL FERTILIZER FROM DIGESTATES**

(30) Priority: 23.09.2015 PL 41410115
(71) Applicant: Bioenergia Plus Sp. z o.o., 20-703 Lublin (PL)
(72) Inventor: JARMUL, Aleksander, 22-400 Zamosc (PL)
(74) Representative: Kalita, Lucjan

(57) **Abstract**

Method of producing organic-mineral fertilizer of the digestate involving concentrating of digestates with flocculants of mineral origin, extrusion, homogenization and mixing with lime is characterized in that the digestate containing 3 - 9% dry matter is concentrated to 25 - 30% dry matter by using flocculants of mineral origin is subjected to extrusion, followed by the stirring, simultaneously injecting the mixture of quicklime and ashes from biomass with ratio 2 - 5:1 in an amount of 0,1 - 0,5 kg per 1 kg of concentrated substrate, after which the obtained mass is subjected to cooling and granulation by known methods, wherein used ashes from the biomass used in the process of the fertilizer production are derived from forest and/or agricultural biomass, and quicklime used during the process has reactivity not more than 1,5 minutes.

## Description

The present invention relates to a method of producing organic-mineral fertilizer from digestate derived especially from biogas plant as the post-fermented substance occurring in the form of pulp. The post-fermented pulp is characterized by a high concentration of mineral compounds of nitrogen (N 3.5 - 6.5 kg/t), phosphorus (P₂0₅ 1 - 3 kg/t), and potassium (K₂0 2 - 7 kg/t), which determines its high fertilizer value in terms of agricultural crops and soil remediation, and also has a high content of organic substances which have a positive effect on the physicochemical properties of the soil.

To date, there are several known solutions to use digestate and other waste and substrates of the specific content of organic matter to produce organic-mineral fertilizers, such as peat, sewage sludge, manure of livestock, poultry litter and the remnants of slaughter. The additives to the main substrates are generally different types of mineral fertilizers (especially nitrogen, potassium and phosphorus) and fly ash from lignite or coal.

From Patent PL 210311 there is known a method of preparing fertilizer from the sludge generated in the biological wastewater treatment plants, in which organic structures are mineralized in a known manner in the presence of sulfuric acid, obtained from this reaction solution is neutralized by compounds of magnesium in a sealed container technology, acid used for mineralization is added so that the reaction temperature does not exceed boiling point, and partial mineralization product is neutralized with a known method using magnesium compounds. The method is characterized in that the processing vessel, comprising a mechanical stirrer, at the beginning, using constant stirring, sludge with dry matter content maintained in the range of 40% to 15%, most preferably above 17% is added, in an amount of 85 parts by weight to 50 parts by weight, preferably 63 parts by weight, then after homogenization and complete breaking down, into the processing vessel calcined magnesite is added preferably with magnesium oxide content maintained in the range of 90% to 70%, most preferably above 75%, in an amount of from 22 parts to 15 parts by weight by weight, preferably 18,2 parts by weight. The process is carried out until an intimate mixture of the two components form a viscous homogeneous mass, after which, to the vessel remaining under encapsulated closure there is a concentration of sulfuric acid dosed at maintained range of 69% to 96%, in an amount of 44 parts by weight to 38 parts by weight, most preferably not less than 41 parts by weight, and a controlled exothermic reaction under elevated in relation to the atmospheric pressure is carried, during which from the vessel an excess of the water in the form of saturated steam is withdrawn, at the same time the sludge is pasteurized at the constant stirring, and remaining not evaporated water is bounded into the crystallization structure thus formed magnesium sulfate, which in the form of a viscous mass is removed from the process vessel after depressurization and subjected to granulation preceded by quench at room temperature maintained until the transformation of the mass into solid structure.

From the invention patent application No. PL 398871 there is also known method for obtaining of organic-mineral fertilizer from digestate, which is characterized in that the post-fermentation waste constituted 20 - 70% of the mass of the batch with content of dry matter 42 - 50%, wherein 35 to 60% is organic carbon, and said post-fermentation waste is treated with concentrated sulfuric acid in an amount of from 10 to 30% of the mass of the batch and then neutralized with magnesium oxide in an amount of from 10 to 30% of the mass of the batch in terms of pure magnesium carbonate at a rate of addition conditioning microbiological sterilization of post-fermentation waste in the temperatures range of 108 - 150°C for 30 minutes while maintaining the momentum of increase temperature of the mixture of 2°C/1 min. The reaction takes place in an acid-proof airtight reactor with a water jacket, stirrer with a number of revolutions from 10 to 50/1 minute, mechanical foam breaking, and a pressurized feed system of solids and liquids. Sulfuric acid is added at such a rate that the temperature gradient does not exceed 2°C/1 min. and exceeds the value of 100°C. The heat from both reactions is received by the reactor's cooling system and hermetic vapor condenser and said heat is transferred to a block of energy and heat for further transportation to the digester methane biogas or external recipients of the heat.

From patent application No. PL 398870 there is another known method for obtaining slurry mineral-organic fertilizers with digestate, characterized in that the post-fermentation waste constituted 20 - 90% of the mass of the batch with content of dry matter 5 - 40%, wherein 30 - 60% is organic carbon, and said post-fermentation waste is treated with calcium oxide in an amount of from 2 - 10% of the mass of the batch and magnesium carbonate in an amount of 2 - 8% of the mass of the batch, and then neutralized with phosphoric acid in an amount of 5 - 20% of the mass of the batch, at temperature of 108 - 150°C for 30 minutes, at a rate of temperature rise of a mixture of 2°C/1 min. The reaction takes place in an acid-proof airtight reactor with a water jacket, stirrer with a number of revolutions from 10 to 50/1 minute, mechanical foam breaking, and a pressurized feed system of solids and liquids. Added magnesium carbonate is in form of magnesite crypto crystalline with grain size below 0.01 mm. Calcium oxide is added to the mixture at a rate resulting the temperature rise of not more than 5°/1 min, and maintaining the process temperature below 100°C. The heat from both reactions is received by the reactor's cooling system and hermetic vapor condenser and said heat is transferred to a block of energy and heat for further transportation to the digester methane biogas.

The above methods for the production of organic-mineral fertilizers relate to the manufacture of products, wherein the dry organic matter constitutes a minor share in the weight of the fertilizer, causing problems with obtaining authorization for these fertilizers for use as organic-mineral fertilizers.

The aim of the invention is to provide a process for producing organic-mineral fertilizer, which allows for total utilization of the biogas fermentation pulp containing 3 - 9% dry weight, which is unnecessary ballast; the method allows to obtain good quality organic-mineral fertilizer, at the lowest possible costs incurred in the production of said fertilizer.

Method of producing organic-mineral fertilizer of the digestate involving concentrating of digestates with flocculants of mineral origin, extrusion, homogenization and mixing with lime and then cooling of the mass and subjecting of said mass to granulation, is characterized in that the digestate containing 3 - 9% dry matter is concentrated to 25 - 30% dry matter by using flocculants of mineral origin as dolomite meal, bentonite and zeolite is subjected to extrusion, followed by the stirring time of 20 - 30 minutes, simultaneously injecting the mixture of quicklime and ash from biomass with ratio of about 2 - 5:1 in an amount of 0,1 - 0,5 kg per 1 kg of concentrated substrate, after which the obtained mass is subjected to cooling in a stream of air and granulation by known methods. The ashes from the biomass used in the process of the fertilizer production are derived from forest and/or agricultural biomass, whereas quicklime mixed with ashes from biomass and added during the process has reactivity not more than 1,5 minutes, and the time of mixing of concentrated extruded substrate with a mixture of lime and ash is preferably 10 - 25 minutes using a stirrer speed of 45 - 90 rev/min, wherein the mixing is carried out in a pasteurization tank. The flocculants used in the method of preparing the fertilizer, have a particle size preferably of 0,5 - 2 mm.

Method of producing organic-mineral fertilizer from digestate according to the invention are shown in the two examples:

### Example 1

Substrate in the form of post-fermented pulp, with dry matter content of 5% was concentrated to 25% dry mater using flocculant of mineral origin such as zeolite, bentonite and dolomite meal with a grain size of 2 mm, then extruded and pre-homogenized in a pre-mixing module. In a first step the mixture was stirred for 4 minutes at a stirrer speed 30 - 40 rev/min, then speed was increased to 40 - 70 rev/min and the mixing was continued for further 3 minutes. After leaving the pre-mixing module 500 kg of obtained sludge were subjected to homogenization in a mixer to compensate for the elimination of humidity and heterogeneity of the mixture. The mixture was then transported using a screw feeder to the stirred tank while simultaneous dispensing a mixture of quick lime with reactivity +60 and ashes from agricultural biomass with mass ratio of 3:1, in an amount of 200 kg. The process of a chemical a hygienization as highly exothermic reaction, which is characterized by elevated temperature and release of large amounts of heat were conducted in pasteurization tank for 15 minutes. After leaving the pasteurization tank, the obtained mass was cooled in an air stream to 40°C and the granulation was carried out by known methods. The resulting granulate, with a moisture content of 18%, contains 40% of the organic fraction, 24% CaO, 4% P₂0₅, 4% K₂0, 1% MgO, 4% of nitrogen and minor amounts of other microelements.

### Example 2

Substrate in the form of post-fermented pulp, with dry matter content of 4% was concentrated to 28% dry mater using flocculant of mineral origin such as zeolite, dolomite meal and bentonite with a grain size of 2 mm, then extruded and pre-homogenized in a pre-mixing module. In a first step the mixture was stirred for 4 minutes at a stirrer speed 30 - 40 rev/min, then speed was increased to 40 - 70 rev/min and the mixing was continued for further 3 minutes. After leaving the pre-mixing module 500 kg of obtained sludge were subjected to homogenization in a mixer to compensate for the elimination of humidity and heterogeneity of the mixture. The mixture was then transported using a screw feeder to the stirred tank while simultaneous dispensing a mixture of quick lime with reactivity +60 and ashes from agricultural biomass with mass ratio of 2:1, in an amount of 180 kg. The process of a chemical a hygienization as highly exothermic reaction, which is characterized by elevated temperature and release of large amounts of heat were conducted in pasteurization tank for 20 minutes. After leaving the pasteurization tank, the obtained mass was cooled in an air stream to 45°C and the granulation was carried out by known methods. The resulting granulate, with a moisture content of 16%, contains 35% of the organic fraction, 25% CaO, 3% P₂0₅, 6% K₂0, 1% MgO, 2% of nitrogen and minor amounts of other microelements.

## Claims

1. Method of producing organic-mineral fertilizer from digestates involving concentrating of digestates with flocculants of mineral origin, extrusion, homogenization and mixing with lime and then cooling of the mass and subjecting of said mass to granulation, **characterized in that,** the digestate containing 3 - 9% dry matter is concentrated to 25 - 30% dry matter by using flocculants of mineral origin as dolomite meal, bentonite and zeolite is subjected to extrusion, followed by the stirring time of 20 -30 minutes, simultaneously injecting the mixture of quicklime and ash from biomass with ratio of 2 - 5:1 in an amount of 0,1 - 0,5 kg per 1 kg of concentrated substrate, after which the obtained mass is subjected to cooling in a stream of air and granulation by known methods.

2. The method according to claim 1, **characterized in that,** the ashes from the biomass used in the process of the fertilizer production are derived from forest and/or agricultural biomass.

3. The method according to claim 1, **characterized in that,** the quicklime used during the process has reactivity not more than 1,5 minutes.

4. The method according to claim 1, **characterized in that,** time of mixing of concentrated extruded substrate with a mixture of lime and ash is preferably 10 - 25 minutes using a stirrer speed of 45 - 90 rev/min.

5. The method according to claim 1 or 4, **characterized in that,** the mixing is carried out in a pasteurization tank.

6. The method according to claim 1, **characterized in that,** the flocculants used in the method of preparing the fertilizer, have a particle size preferably of 0,5 - 2 mm.
